Europäisches Patentamt

(19) European Patent Office

Office européen des brevets

(11) Publication number: **0 002 385**

**B1**

(12) **EUROPEAN PATENT SPECIFICATION**

(21) Application number: **78300739.6**

(22) Date of filing: **05.12.78**

(51) Int. Cl.³: **F 02 M 55/02,**
**F 16 L 39/00, F 02 B 77/08**

(54) **Double-walled fluid pressure line**

(30) Priority: **07.12.77 US 858226**

(43) Date of publication of application:
**13.06.79 Bulletin 79/12**

(45) Publication of the grant of the European patent:
**07.01.81 Bulletin 81/01**

(84) Designated Contracting States:
**DE GB SE**

(56) References cited:
**DE - A - 1 808 228**
**DE - A - 1 809 619**
**DE - A - 2 523 582**
**DE - C - 462 273**
**FR - A - 2 018 223**

(73) Proprietor: **CATERPILLAR TRACTOR CO.**
**100 Northeast Adams Street**
**Peoria Illinois 61629 (US)**

(72) Inventors: **Kuntz, Donald Albert**
**100 North Hazlewood Street**
**Morton Illinois 61550 (US)**
**Winters, Michael Allen**
**3113, West Chartwell**
**Peoria Illinois 61614 (US)**

(74) Representative: **Brunner, Michael John, et al**
**Gill Jennings & Every**
**53 to 64 Chancery Lane**
**London WC2A 1HN (GB)**

Courier Press, Leamington Spa, England.

Double-walled fluid pressure line

This invention relates to double-walled fluid pressure lines, in particular fuel lines for use in fuel supply systems, for example fuel injection systems interconnecting say a fuel pump and a fuel injection nozzle.

Fuel injection pumps employed in fuel injection systems generate extremely high hydraulic pressures which may range upwardly from several million e.g. 4.8 to $10^7$ to $1 \times 10^8$ Pa (approx. 7 thousand to 15 thousand pounds per square inch). The pressures are generated in pulse form to direct fuel from the pump through fuel lines to injection nozzles, typically associated with engines or other fuel burning plant such as furnaces. Because of rapid cycling and/or vibration associated with the plant with which the injection system may be used, there may be a tendency for fittings to loosen and/or conduits to fracture under the pressures involved.

In the case of either, fuel spillage has occured and such spillage is particularly undesirable where plant is operating in an enclosed area and/or substantially unattended thereby causing combustible vapours to form and/or permitting a hazardous sizable accumulation of fuel to occur in an area where it is unlikely to be discovered.

To avoid such difficulties, it has been suggested (see DE-C-462 273) to provide double-walled fuel lines so that if the inner fuel carrying conduit ruptures, fuel will be captured by the outer conduit to prevent leakage and maintain the fuel supply to the plant. An end connector of the lines provides axial communication between the outer conduit and the source of fluid so as to, at least initially, eliminate leakage due to rupture of the inner conduit, but if the initial rupture is large, and anyway after a reasonable length of time has elapsed, the outer conduit has to withstand substantially the full pressure of the fuel supplied to the inner conduit.

Furthermore, if fluid is leaking into the outer tube at the end connector it will merely fill the outer conduit as there is no escape for the fluid from the outer conduit other than that at the connector.

According to the present invention, a double-walled fluid pressure line has a first tube having opposed ends; axially oppositely directed, radially outwardly facing sealing surfaces on the end of the first tube; a pair of washers one on each end of the first tube disposed just axially inwardly of the respective sealing surface; a pair of nuts, one on each end of the first tube and rotatable thereon, the nuts housing respective ones of the washers and the sealing surfaces; a second tube nominally concentrically disposed around the first tube in spaced relation thereto to define an elongate annular space, characterized in that at least one of the washers has a greater radius than the corresponding sealing surface and an axially extending passage extending therethrough, the axially extending passage providing a path for fluid, leaking in use from between the corresponding sealing surface and a complementary surface of a part to which the corresponding end of the first tube is coupled, from the leak to a port venting the annular space.

Thus, any fuel leaking from the inner tube into the outer tube can be returned safely to its source via the port thus minimizing the danger of fluid pressure build up in the fuel line. Furthermore, if the leak is only small the line can continue to function whilst returning excess, leaking, fuel to the source.

The invention also includes a fluid fuel supply system having a fuel source, characterized in that the inner tube of the line is connected to the source to receive fuel therefrom and that the port is separately connected back to the source to return any fuel passing into the second tube back to the source.

The fuel source may comprise a reservoir and fluid pump as well in which case the port may return fuel to the reservoir via a separate tube.

Preferably, the supply line is bendable, the inner tube being deformable into a required configuration and the outer tube being resilient to allow it to flex around bends in the inner tube to maintain an open return path to the source.

In the present context high pressure means preferably greater than $5 \times 10^7$ Pa (500 kg/sq.cm).

An example of a fuel injection engine plant incorporating a fluid pressure line constructed in accordance with the invention is illustrated in the accompanying drawings, in which:—

Figure 1 is a schematic view of the engine plant;

Figure 2 is an axial sectional view of one fuel supply line;

Figure 3 is an enlarged view of one end of the line; and,

Figure 4 is a cross-sectional view illustrating a typical relationship of the components of the fuel line when bent.

The illustrated fuel line is associated with an engine 10 supplied with fuel from a tank 12. The tank 12 has a conventional conduit 14 extending to a conventional fuel injection pump 16 which, in turn, provides fuel under high pressure (in the present context, high pressure means preferably greater than 500 Kg/sq.cm.) and in pulse form in a desired sequence to a plurality of fuel supply lines 18, to be described, which convey the fuel to fuel injection nozzles 20 associated with the engine 10. As will be described the fuel lines 18 are double walled and are provided with means which direct leaking fuel to a conduit 24 by which it may be returned to the tank as (as shown) or, alternatively, to the input of the injection pump 16, and, if required, to an alarm 28. Instead of the alarm 28, the line 18 may pass leaking fuel to a sight glass to give a visual warning to an operator.

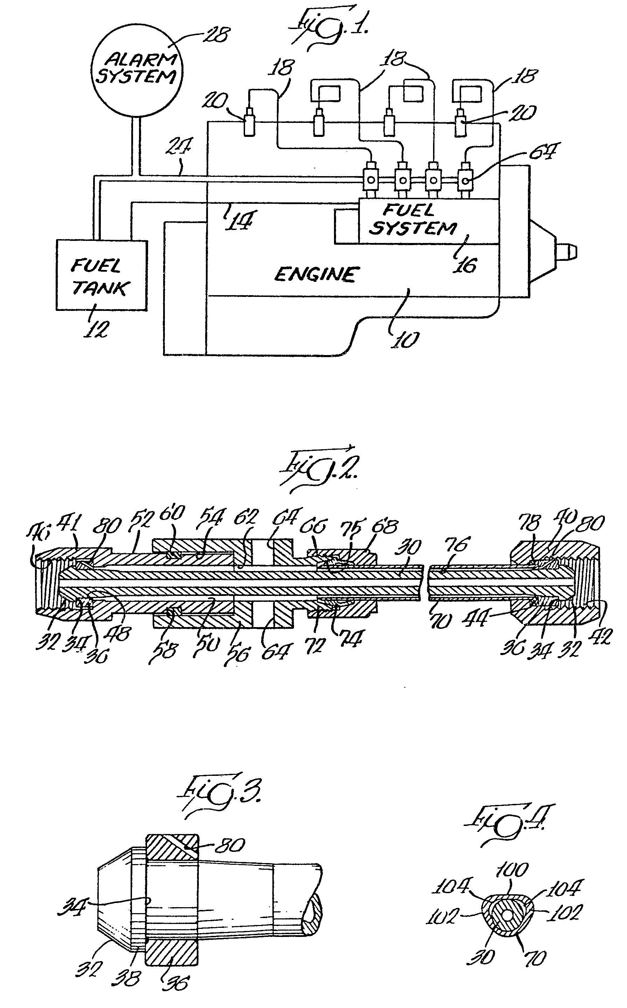

The fuel lines 18 are adapted to return leaking fuel if leakage occurs due either to rupture or to leakage at the fittings. With the foregoing in mind, one embodiment of a fuel line will be described in greater detail with reference to Figures 2 to 4.

The fuel line includes a first, elongate, metallic rigid tube 30 which has a wall thickness sufficient to withstand the high pressures generated by the pump 16. The precise wall thickness will depend upon the inner diameter of the tube 30 which, in turn, will be dependent upon the pressures generated as well as fuel delivery requirements and are well known in the art, forming no part of the present invention. In the overwhelming majority of cases, such criteria will result in the tube 30, while rigid, being bendable by conventional tube bending equipment such as generally available mechanical presses utilizing pneumatic or hydraulic pressure.

Each end of the tube 30 is provided with a sealing surface 32 which as illustrated, is frusto-conical such that the two surfaces 32 are opposed from each other and oppositely axially directed. They also face radially outwardly. The surface 32 are formed integrally on the tube 30 after other components to be described are assembled thereon. In the usual case, the surfaces 32 will be formed by cold forming such as swaging. Just axially inwardly of each of the surfaces 32 is a shoulder 34, also cold formed, against which a washer 36 is abutted. The washers 36 will typically be formed of steel or iron and will not deteriorate upon exposure to petroleum or other fuel products.

It will be observed from Figure 3 that each washer 36 extends radially outwardly from the radially outer extent 30 of each sealing surface 32 for purposes to be seen.

The respective ends of the tube 30 are provided with nuts 40 and 41, each having an external hexagonal head configuration (not shown) for conventional tightening purposes. The nut 40 has a interior screw threaded surface 42 by which the same may be affixed to a male fitting associated with either the pump 16 or nozzle 20, the male member being provided with a sealing surface that will mate with the sealing surface 32 at the associated end of the tube 30.

Opposite the screw threaded surface 42 is a radially inwardly directed shoulder 44, for purposes to be described and intermediate the surface 42 and the shoulder 44, the nut 40 receives and houses both the associated washer 36 and the sealing surface 32.

The nut 41 is provided with a similar screw threaded surface 46 for capturing a screw threaded male member having a sealing surface designed to seal against the sealing surface 32 at the associated end of the tubing 30 as well as a radially inwardly directed shoulder 48 which abuts the washer 36 at the associated tubing end with the intermediate portion of the nut housing both the washer 36 and the sealing surface 32.

Axially inwardly of the shoulder 48 is an enlarged diameter bore 50. The end of the nut 41 remote from the internally threaded end 46 is of reduced diameter, as shown at 52, and is received within an enlarged diameter bore 54 within a fitting 56. A radially outwardly opening, peripheral groove 58 in the nut 41 receives an annular seal 60 to establish a seal at the interface between the fitting 56 and the nut 41.

The bore 54 extends to a reduced diameter bore 62 within the fitting 56. As illustrated, the tube 30 extends through both bores 62 and 50 and is of lesser diameter than either. Two radially directed ports 64 are provided with screw threads (not shown) and extend to the small diameter bore 62. One of the bores 64 is adapted to be connected to the conduit 24 and alarm 28, which the other will typically be provided with a removable plug for purposes to be seen.

The right-hand end of the fitting 56 is provided with a screw threaded, reduced diameter section 66 which received the nut 68 of a conventional compression fitting.

A second tube 70, which may be metal, rigid and bendable with conventional tube bending equipment or substantially flexible, has an end 72 extending through the nut 68 and into the reduced diameter bore 62. A conventional, sealing sleeve 74 is disposed on the end 72 and within the nut 68 partially to enter the bore 62 as well. Consequently, upon tightening of the nut 68, the sleeve 74 sealingly engages both the outer diameter of the second tube 70 and the flared end 75 of the bore 62. The outer diameter of the tube 70 is just slightly less than the diameters of the bores 50 and 62. Thus, both the nut 41 and the fitting 56 may telescope onto the tube 70 to expose the ends of the tube 30 to allow forming of the surfaces 32 and shoulders 34.

Moreover, the tube 70 is circular in cross-section as is the tube 30 and has an inner diameter greater than the outer diameter of the tube 30 and is nominally concentrically disposed about the tube 30. Because of the relationship of inner and outer diameters, an elongate, annular space 76 exists between the tubes 30 and 70. The end of the tub 70 remote from the end 72 is flared slightly as at 78 and is in abutment with the washer 36 associates with the nut 40.

As a consequence of the foregoing, it will be appreciated that when the nuts 40 and 41 are secured to male members in the fuel injection system and the nut 68 is tightened, the ends of the tubes 30 and 70 will be sealed to the washers 36 so that any rupture of tube 30 will result in leaking fuel being directed to the annular space 76 to flow therethrough to the bore 62 and then via one of the ports 64 to the return line 24 and activate the alarm 28. The presence of fuel in the annular space 76 of any of the lines may be visually observed by removing the plug (not shown) associated with the other of the ports 64 to assist in determining the leaky line.

In order to direct leaking fuel due to looseness of interengaging sealing surfaces 32 to the return line 24, one or both of the washers 36 may be provided with a small passage 80, as seen in Figure 3. The passage 80 extends generally axially through the washer 36 to establish fluid communication between the annular space 76 and a point radially outwardly of the radially outwardmost extent 38 of the sealing surface 34. Thus, any leaking fuel travelling along the surfaces 32 will ultimately reach the passage 80 to be directed to the return line 24.

In order to provide a fuel line that is bendable on conventional tube bending equipment, the tube 70 is provided with a relatively thin wall. In most cases, the wall thickness will be in the order of about 1 mm. or less and, in a highly preferred embodiment, wherein the outer diameter of the tube 70 is slighlty less than 1.02 cm., will be about 0.7 mm. The tube 70 may be formed of steel or other similar materials.

Figure 4 illustrates a typical cross-section taken through the tubes 30 and 70 intermediate their ends after being bent by tube bending equipment. The surface 100 of the tube 70 engaged by the tool tends to flatten and immediately adjacent thereto, the surface bulges as at 102 on opposite sides of the tube 70. The tube 30 is substantially undistorted and is engaged at opposite sides by the tube 70. However, areas 104 in the vicinity of the bulges 102 remain open as part of the annular space 76 to allow the flow of fuel to the return line 24 in the manner previously described.

Thus, it will be appreciated that the fuel line ensures against fuel spillage due to either rupture of the main fuel line or leakage at sealed connections. It also provides the significant advantage of being bendable with conventional tube bending equipment without fear of blocking the flow path to the return line, thereby allowing easy installation without requiring precisely fitted pipes or the like.

A highly significant feature is the absence of interengaging structure extending between the tubes 30 and 70 within the annular space 76. If such structure were present, deformation such as illustrated in Figure 4 during bending of the fuel line would not occur, but rather, the structure would tend to collapse the first, thereby decreasing its fuel carrying capacity and interfering with proper operation of the injection system.

Whilst the invention has been described in conjunction with a high pressure fuel supply system, it will be appreciated that the invention is applicable to low pressure systems as well, and that the plant to which the fuel is supplied could be of any known type.

**Claims**

1. A double-walled fluid pressure line comprising a first tube (30) having opposed ends; axially oppositely directed, radially outwardly facing sealing surfaces (32) on the ends of the first tube (30); a pair of washers (36) one on each end of the first tube (30) disposed just axially inwardly of the respective sealing surface (32); a pair of nuts (40, 41) one on each end of the first tube (30) and rotatable thereon, the nuts (40, 41) housing respective ones of the washers (36) and the sealing surfaces (32); a second tube (70) nominally concentrically disposed around the first tube (30) in spaced relation thereto to define an elongate annular space (76), characterized in that at least one of the washers (36) has a greater radius than the corresponding sealing surface (32) and an axially extending passage (80) extending therethrough; the axially extending passage (80) providing a path for fluid, leaking in use from between the corresponding sealing surface (32) and a complementary surface of a part to which the corresponding end of the first tube (30) is coupled, from the leak to a port (64) venting the annular space (76).

2. A line according to claim 1, characterized in that one end of the second tube (70) is captured within one of the nuts (40) in substantial abutment with the associated washer (36) which is substantially sealed to the first and second tubes (30, 70 repectively), and the other end of the second tube (70) being sealed to a fitting (56) associated with the other of the nuts (41); the port (64) being provided in the fitting (56); a bore (62) in the fitting (56) of larger cross-section than the first tube (30) receiving the first tube and the second tube other end, the port (64) extending to the bore (62) to establish fluid communication between the port (64) and the annular space (76) for venting any fluid leaking into the annular space (76).

3. A line according to claim 1 or claim 2, characterized in that the first tube (30) has a wall thickness sufficient to withstand high internal pressures and yet be bent on conventional tube bending equipment; and the second tube (70) has a relatively thin wall so as to be bendable with the first tube (30) on conventional tube bending equipment.

4. A line according to claim 1, claim 2 or claim 3, characterized in that the fitting (56) includes two ports (64) each extending to the bore (62), one arranged to be connected to a vent for the annular space (76) and the other being arranged to be selectively opened or closed to enable inspection to determine whether fluid is in the annular space (76).

5. A line according to any one of the preceding claims, characterized in that a sealing sleeve (74) is provided on the second tube other end engaging an end of the bore (62), a further nut (68) on the second tube other end being screwed to the fitting about the bore (62) to cause the sleeve (74) to seal the bore (62) to the second tube other end, the other end of the bore (62) having an enlarged diameter (54) partially receiving the other nut (41), and an annular seal (60) sealing the interface of the bore (54) and the other nut (41).

6. A line according to any one of the preceding claims, characterized in that the annular space (76) is free from structure extending between the tubes (30,70) along substantially the length thereof.

7. A fluid fuel supply system including a double-walled fluid pressure line (18) according to any of claims 1 to 6.

8. A fluid fuel supply system according to claim 7, having a fuel source (12, 16), characterized in that the inner tube (30) of the line (18) is connected to the source (12, 16) to receive fuel therefrom and that the port (64) is separately connected back to the source (12, 16) to return any fuel passing into the second tube (70) back to the source (12, 16).

9. A fluid fuel supply system according to claim 8, in which the source comprises a reservoir (12) and a pump (16), characterized in that the port (64) is connected to one end of a pipe (24), the other end of the pipe being connected to the reservoir (12), the line (18) being connected directly to the pump (16).

## Revendications

1. Conduit de fluide sous pression à double paroi, comprenant un premier tube (30) ayant des extrémités opposées; des surfaces d'étanchéité (32) sur les extrémités du premier tube (30), dirigées axialement en sens inverse et tournées radialement vers l'extérieur; deux rondelles (36), une sur chacune des extrémités du premier tube (30), disposées immédiatement à l'intérieur axialement de la surface d'étanchéité (32) correspondante; deux écrous (40, 41), un à chaque extrémité du premier tube (30) et pouvant tourner sur celui-ci, les écrous (40, 41) recevant les rondelles (36) et les surfaces d'étanchéité (32) respectivement associées; et un second tube (70) disposé concentriquement autour du premier tube (30), à une certaine distance de celui-ci, de façon à délimiter un espace annulaire allongé (76), caractérisé en ce qu'au moins une des rondelles (36) a un plus grand rayon que la surface d'étanchéité (32) correspondante et est percée d'un canal (80) s'étendant axialement; le canal s'étendant axialement (80) constituant une voie d'écoulement pour le fluide qui, pendant l'utilisation, fuit entre la surface d'étanchéité (32) correspondante et une surface complémentaire d'une pièce à laquelle l'extrémité correspondante du premier tube (30) est couplée, entre la fuite et un orifice (64) ventilant l'espace annulaire (76).

2. Conduit selon la revendication 1, caractérisé en ce que l'une des extrémités du second tube (70) est emprisonnée dans l'un des écrous (40) de façon à buter pratiquement contre la rondelle correspondante (36), laquelle est pratiquement scellée au premier et au second tubes (30, 70) et en ce que l'autre extrémité du second tube (70) est scellée á une pièce (56) associée à l'autre écrou (41); l'orifice (64) étant prévu dans la pièce (56); en ce qu'um alésage (62) de la pièce (56) a une plus grande section que le premier tube (30) et reçoit ce premier tube et l'autre extrémité du second tube, l'orifice (64) s'étendant jusqu'à l'alésage (62) afin d'établir une communication pour le fluide entre l'orifice (64) et l'espace annulaire (76) afin d'évacuer tout fluide pouvant fuir dans l'espace annulaire (76).

3. Conduit selon la revendication 1 ou 2, caractérisé en ce que la paroi du premier tube (30) est assez épaisse pour supporter des pressions internes élevées tout en pouvant néanmoins être cintrée sur un équipement classique de cintrage de tube; et en ce que le second tube (70) a une paroi relativement mince de façon à pouvoir être cintré en même temps que le premier tube (30 sur l'équipement de cintrage classique.

4. Conduit selon l'une quelconque des revendications 1 à 3, caractérisé en ce que la pièce (56) présente deux orifices (64) dont chacun s'étend jusqu'à l'alésage (62), l'un étant arrangé pour être raccordé à évent pour l'espace annulaire (76), tandis que l'autre est arrangé pour pouvoir être sélectivement ouvert ou fermé afin de permettre une inspection destinée à déterminer si de fluide est dans l'espace annulaire (76).

5. Conduit selon l'une quelconque des revendications précédentes, caractérisé en ce qu'un manchon d'étanchéité (74) est prévu sur l'autre extrémité du second tube qui est appliquée contre l'une des extrémités de l'alésage (62), un autre écrou (68) situé sur l'autre extrémité du second tube étant vissé sur la pièce (56), autour de l'alésage (62), afin de faire en sorte que le manchon (74) relie l'alésage (62) de façon étanche à l'autre extrémité du second tube, l'autre extrémité de l'alésage (62) ayant un diamètre agrandi (54) recevant partiellement l'autre écrou (41), un joint annulaire (60) étanchant l'interface de l'alésage (54) et de l'autre écrou (41).

6. Conduit selon l'une quelconque des revendications précédentes, caractérisé en ce que l'espace annulaire (76) n'a pas de structure s'étendant entre les tubes (30, 70) pratiquement le long de toute sa longueur.

7. Système d'alimentation de carburant fluide comportant un conduit de fluide sous pression à double paroi (18) conforme à l'une quelconque des revendications 1 à 6.

8. Système d'alimentation de carburant fluide selon la revendication 7, ayant une source de carburant (12, 16), caractérisé en ce que le tube intérieur (30) du conduit (18) est relié à la source (12, 16) afin d'en recevoir du carburant et en ce que l'orifice (64) est relié séparément à la source (12, 16) afin de ramener à la source (12, 16) le carburant passant dans le second tube (70).

9. Système d'alimentation de carburant fluide selon la revendication 8, dans lequel la source comprend un réservoir (12) et une pompe (16), caractérisé en ce que l'orifice (64) est relié à l'une des extrémités d'un tuyau (24) dont l'autre extrémité est reliée au réservoir (12), le conduit (18) étant directement raccordé à la pompe (16).

**Patentansprüche**

1. Doppelwandige Störmungsmitteldruckleitung mit einem entgegengesetzte Enden aufweisenden ersten Rohr (30), axial entgegengesetzt gerichteten, radial nach außen weisenden Abdichtoberflächen (32) auf den Enden des ersten Rohres (30), einem Paar von Unterlegscheiben (36), von denen eine auf jedem Ende des ersten Rohrs (30) unmittelbar axial nach innen gegenüber der entsprechenden Abdichtoberfläche (32) angeordnet ist, einem Paar von Muttern (40, 41), von denen eine auf jedem Ende des ersten Rohrs (30) dehbar darauf angeordnet ist, wobei die Muttern (40, 41) die jeweils entsprechenden Unterlegscheiben (36) und Abdichtoberflächen (32) aufnehmen, und ferner mit einem zweiten Rohr (70), welches nominell konzentrisch um das erste Rohr (30) mit Abstand demgegenüber angeordnet ist, um einen langgestreckten Ringraum (76) zu definieren, dadurch gekennzeichnet, daß mindestens eine der Unterlegscheiben (36) einen größeren Radius besitzt als die entsprechende Abdichtoberfläche (32) und einen sich axial erstreckenden hindurchverlaufenden Durchlaß (80); der sich axial erstreckende Durchlaß (80) sieht einen Pfad für das Strömungsmittel vor, welches beim Gebrauch zwischen der entsprechenden Abdichtoberfläche (32) und einer komplementären Oberfläche eines Teils, mit dem das entsprechende Ende des ersten Rohrs (30) gekuppelt ist, herausleckt, und zwar von dem Leck zu einer Öffnung (64). welche für den Ringraum (76) einen Austritt vorsieht.

2. Leitung nach Anspruch 1, dadurch gekennzeichnet, daß ein Ende des zweiten Rohrs (70) innerhalb einer der Muttern (40) im wesentlichen in Anschlag mit der zugehörigen Unterlagscheibe (36) eingefangen ist, die im wesentlichen mit den ersten und zweiten Rohren (30 bzw. 70) abgedichtet ist, und wobei das andere Ende des zweiten Rohrs (70) mit einem Fitting (56), verbunden mit der anderen der Muttern (41), abgedichtet ist, daß die Öffnung (64) in dem Fitting (56) vorgesehen ist, und daß eine Bohrung (62) in dem Fitting (56) mit größerem Querschnitt als das erste Rohr (30) das erste Rohr und das andere Ende des zweiten Rohrs aufnimmt, wobei sich die Öffnung (64) zur Bohrung (62) hin erstreckt, um eine Strömungsmittelverbindung zwischen der Öffnung (64) und dem Ringraum (76) vorzusehen, um jedwedes in den Ringraum (76) leckendes Strömungsmittel austreten zu lassen.

3. Leitung nach Anspruch 1 oder 2, dadurch gekennzeichnet, daß das erste Rohr (30) eine Wanddicke besitzt, die ausreicht, um hohen Innendrücken zu widerstehen und dabei doch auf üblichem Rohrbiegegerät gebogen werden kann, und daß das zweite Rohr (70) eine relativ dünne Wand besitzt, um mit dem ersten Rohr (30) auf konventionellem Rohrbiegegerät biegbar zu sein.

4. Leitung nach Anspruch 1, 2 oder 3, dadurch gekennzeichnet, daß das Fitting (56) zwei sich jeweils zu der Bohrung (62) erstreckende Öffnungen (64) aufweist, deren eine zur Verbindung mit einem Austritt für den Ringraum (76) angeordnet ist, während die andere zum selektiven Öffnen oder Schließen angeordnet ist, um eine Inspektion zur Bestimmung des Vorhandenseins von Strömungsmittel in dem Ringraum (76) zu gestatten.

5. Leitung nach irgendeinem der vorhergehenden Ansprüche, dadurch gekennzeichnet, daß eine Abdichthülse (74) auf dem anderen Ende des zweiten Rohrs in Eingriff mit einem Ende der Bohrung (62) vorgesehen ist, daß eine weitere Mutter (68) auf dem anderen Ende des zweiten Rohres auf das Fitting um die Bohrung (62) herum aufgeschraubt ist, um zu bewirken, daß die Hülse (74) die Bohrung (62) mit dem anderen Ende des zweiten Rohrs abdichtet, wobei das andere Ende der Bohrung (62) einen die andere Mutter (41) teilweise aufnehmenden vergrößerten Durchmesser (54) besitzt, und daß eine ringförmige Dichtung (60) die Grenzfläche von Bohrung (54) und der anderen Mutter (41) abdichtet.

6. Leitung nach irgendeinem der vorhergehenden Ansprüche, dadurch gekennzeichnet, daß der Ringraum (76) frei ist von Struktur, die sich zwischen den Rohren (30, 70) erstreckt, und zwar längs im wesentlichen der Länge davon.

7. Strömungsmittel-Brennstoffversorgungssystem mit einer doppelwandigen Strömungsmitteldruckleitung (18) nach irgendeinem der Ansprüche 1—6.

8. Strömungsmittel-Brennstoffversorgungssystem nach Anspruch 7 mit einer Brennstoffquelle (12, 16), dadurch gekennzeichnet, daß das innere Rohr (30) der Leitung (18) mit der Quelle (12, 16) zur Aufnahme von Brennstoff verbunden ist, und daß die Öffnung (64) gesondert zur Quelle (12, 16) rückverbunden ist, um jedweden in das zweite Rohr (70) gelangenden Brennstoff zurück zur Quelle (12, 16) zu bringen.

9. Strömungsmittel-Brennstoffversorgungssystem nach Anspruch 8, dadurch gekennzeichnet, daß die Quelle ein Reservoir (12) und eine Pumpe (16) aufweist, dadurch gekennzeichnet, daß die Öffnung (64) mit einem Ende eines Rohrs (24) in Verbindung steht, daß das andere Ende des Rohrs mit dem Reservoir (12) verbunden ist, und daß dié Leitung (18) direkt mit der Pumpe (16) in Verbindung steht.

Fig. 1.

Fig. 2.

Fig. 3.

Fig. 4.